# EUROPEAN PATENT APPLICATION

(11) **EP 4 607 353 A1**
(43) Date of publication of application: **27.08.2025**
(21) Application number: 24159522.2
(22) Date of filing: 23.02.2024
(51) Int. Cl.: G06F 11/00, G06F 11/14

(54) **RESOURCE FAILURE MITIGATION**

(71) Applicant: ABB SCHWEIZ AG, 5400 Baden (CH)
(72) Inventor: ESKANDANI, Nafise, 64380 Rossdorf (DE); KOZIOLEK, Heiko, 76227 Karlsruhe (DE)
(74) Representative: Maiwald GmbH

(57) **Abstract**

Resource failure in a distributed control system (DCS) can compromise stability and availability of the system. There is therefore provided a resource failure mitigation method for a distributed control system. The method comprises: predicting failure of a first resource executing a service; persisting a state of the service; and restoring the service at a second resource using the persisted state. A corresponding system is also provided. Risk of data loss can thereby be reduced while improving resiliency, resulting in an improved user experience for non-critical services.

## Description

### FIELD OF THE INVENTION

The invention relates to systems and methods for resource failure mitigation in distributed control systems.

### BACKGROUND

Industrial automation systems typically include a distributed control system (DCS) in which services are executed by compute resources distributed throughout the system. Resource failure in a DCS can compromise stability and availability of the system. If the failed resource was providing database access or application processing, these services are interrupted. If the failed resource was storing data that was not replicated or backed up, there is a risk of data loss. Besides, when a resource fails, its workload needs to be redistributed to other resources, potentially causing performance degradation or further failures if the additional load is excessive. Even though the DCS is designed with redundancy in mind, multiple simultaneous resource failures may render the entire system inoperative.

### SUMMARY

It would be desirable to maintain resiliency in case of resource failure in a distributed control system (DCS). To better address one or more of these concerns, there is provided, in a first aspect of the invention, a resource failure mitigation method for a distributed control system, the method comprising:
predicting failure of a first resource executing a service;
persisting a state of the service; and
restoring the service at a second resource using the persisted state.

Predicting failure of the first resource may comprise predicting resource failure based on diagnostic data, for example by analyzing the diagnostic data. The diagnostic data may comprise monitoring data relating to one or more performance metrics of the resource. The diagnostic data may comprise log data generated by one or more diagnostic tools. The diagnostic data may comprise event data relating to one or more events generated by the DCS. Predicting failure of the first resource may comprise predicting resource failure in response to at least one performance metric passing (falling above or below) a predetermined threshold. Predicting failure of the first resource may comprise predicting resource failure in response to log data indicating violation of at least one predetermined rule. Predicting failure of the first resource may comprise predicting resource failure in response to recognition of at least one predetermined event. The method may further comprise, in response to predicting failure, issuing a failure notification.

Persisting the state of the service may comprise storing the state of the service, for example by checkpointing the service, to capture a snapshot of the state of the service. Persisting the state of the service may comprise checkpointing the state of a container in which the service is running, wherein the service is provided by a containerized application. The step of persisting the state of the service may form part of a checkpoint/restore workflow. The "persisted state" may thus comprise a checkpoint of the service, and/or of a container in which the service was running.

Restoring the service at the second resource using the persisted state may comprise using images of the checkpointed state of the service to restore the service. Restoring the service may comprise instantiating a new container for the service at the second resource and restoring the service in the new container using the persisted state The step of restoring the service may form part of a checkpoint/restore workflow. The checkpoint/restore workflow may comprise a Checkpoint and Restore in Userspace (CRIU) workflow. Restoring the service at the second resource may comprise first selecting the second resource from a plurality of available resources according to one or more predetermined criteria, for example for load balancing.

The method may further comprise using the distributed control system to control an industrial plant to carry out an industrial process following restoration of the service at the second resource. In that sense, the method may be described as a method for carrying out an industrial process.

The method of the first aspect may be computer implemented.

According to a second aspect, there is provided a resource failure mitigation system configured to perform the method of the first aspect.

According to a third aspect, there is provided a computer program (product) comprising instructions which, when executed by a computing system, enable or cause the computing system to perform the method of the first aspect.

According to a fourth aspect, there is provided a computer-readable (storage) medium comprising instructions which, when executed by a computing system, enable or cause the computing system to perform the method of the first aspect. The computer-readable medium may be transitory or non-transitory, volatile or non-volatile.

The term "resources" is used herein to denote any resources which may be assigned to execute services within a plant or across plants. The term may refer to compute resources including for example CPU, memory, storage, or redundancy. Resources may comprise hardware and/or software that detects or causes changes, through the monitoring and/or control of plant equipment, processes and events. The resources may comprise or be comprised in one or more clusters comprising one or more (compute) nodes. It will be understood, however, that the present disclosure is not limited to Kubernetes or any particular orchestration tool which uses the above-recited terminology.

By "services" as used herein is meant a software service to which resources can be assigned for executing the service. The service may be provided by an application, which may comprise a stateful and/or containerized application. One or more of the services described herein may execute control logic for automating an industrial process.

By "(industrial) plant" is meant herein any system used for process automation, factory automation, or warehouse automation. The plant may comprise a production plant and/or a process plant for carrying out an industrial process. The industrial process may be a continuous, batch, or discrete process. The plant may comprise one or more pipelines for transforming one or more educts or raw materials into a product.

Additionally or alternatively, the plant may comprise one or more assembly lines for assembling one or more components into a product. The plant may be modular or monolithic (i.e., non-modular).

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawings, in which:-
FIG. 1 schematically illustrates a node failure mitigation system according to the present disclosure; and
FIG. 2 schematically illustrates a computing system that can be used in accordance with the systems and methods disclosed herein.

### DETAILED DESCRIPTION

Industrial automation systems typically include a distributed control system (DCS) in which services are executed by compute resources distributed throughout the system. Resource failure in a DCS can compromise stability and availability of the distributed control system.

The present disclosure relates to systems and methods for mitigating resource failure in the DCS using failure prediction and container checkpointing. The system predicts resource failure by analyzing diagnostic data. Upon predicting an upcoming resource failure, the system triggers a checkpoint/restore workflow to checkpoint the state of a container running on the resource and to move the state to another resource, for example the node with the lowest load in the cluster. The workflow restores the container on other resource by instantiating the same container image and restoring the previously persisted state into the instantiated container using the checkpoint. In this way, the system reduces the risk of data loss with negligible downtime.

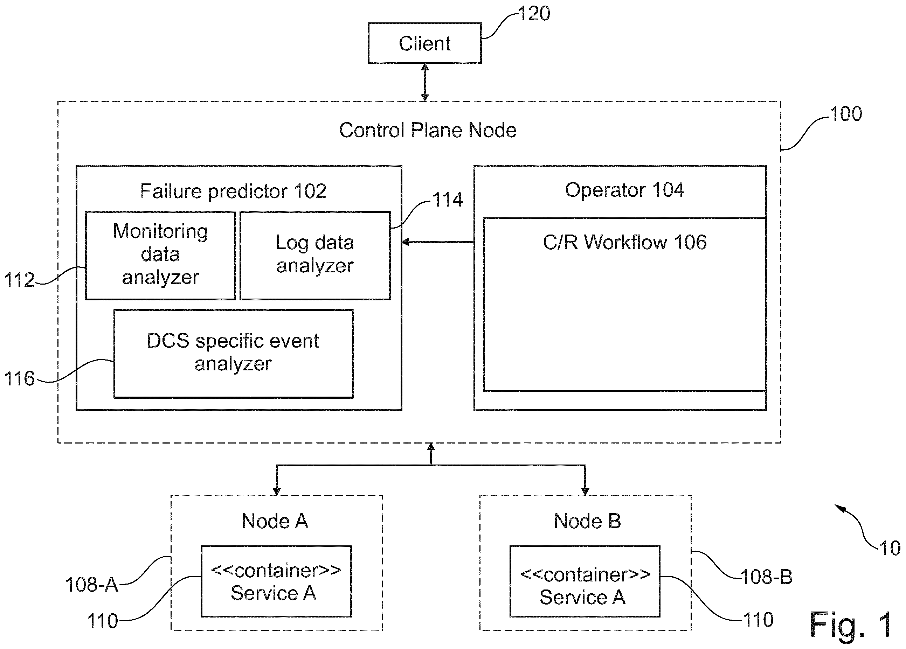

FIG. 1 schematically illustrates a node failure mitigation system 10 according to the present disclosure. The system 10 comprises two main components in a control plane node 100: a failure predictor 102 and an operator 104 (e.g., a Kubernetes Operator) with a checkpoint/restore (C/R) workflow 106. The control plane node 100 forms part of a cluster additionally comprising a set of worker nodes 108-A and 108-B, collectively referred to as nodes 108, that run containerized applications providing services 110.

The failure predictor 102 utilizes diagnostic data to predict failure of a node 108 in the cluster. Such data can be generated by diagnostic tools such as Elastic Stack, by DCS-specific events such as security attacks or software errors, and/or by monitoring performance metrics of the node 108 such as CPU and memory usage. In the non-limiting example illustrated in FIG. 1, the failure predictor 102 comprises a monitoring data analyzer 112 configured to analyze performance metrics of the node 108 such as CPU and memory usage, a log data analyzer 114 configured to analyze logs generated by diagnostic tools, and a DCS-specific event analyzer 116 configured to analyze events generated by the DCS. In one example, the monitoring data analyzer 112 responds to a continuously rising CPU load by indicating an upcoming overutilized node that can no longer serve user requests received from a client 120. In another example, the log data analyzer 114 compares monitored behavior to predefined rules for normal behavior (e.g., service A must start 1 minute after service B) and predicts node failure based on violation of the rules. In yet another example, the DCS-specific event analyzer 116 recognizes a predetermined user event that indicates a potential security breach. These exemplary approaches may be combined in any permutation. The failure predictor 102 thus predicts node failure based on any such diagnostic data and, upon failure prediction, issues a failure notification to the operator 104. Since the failure is predicted, it will be understood that the notification is issued before the failure materializes.

In response to the failure notification, the operator 104 triggers the C/R workflow 106, whereby the current state of the container is persisted, moved to another node, and restored there, to ensure service state maintenance. In one non-limiting example, the C/R workflow 106 utilizes Checkpoint and Restore in Userspace (CRIU). The operator 104 may comprise an autonomously running software agent running in the control plane node 100 that is aware of all nodes and networks in the cluster and that is responsible for load balancing. The C/R workflow 106 checkpoints the containers running on the potentially failed node using CRIU and stores the states of the containers in a set of images, before moving the generated images to another node, for example that with the lowest load, and restoring the containers from their previous states. The load balancing functionality of the operator 104, which in one non-limiting example is implemented using a container orchestration system such as Kubernetes, handles the redirection of new client requests to the restored containers now residing on a different host node and having different network addresses. It is feasible that such container checkpointing can be performed sufficiently rapidly to save the states of the containers before the actual node failure materialises.

Systems and methods described herein thus provide node failure prediction for DCS systems to reduce the risk of data loss caused by node failure along with service state maintenance to improve resiliency, resulting in an improved user experience for noncritical services.

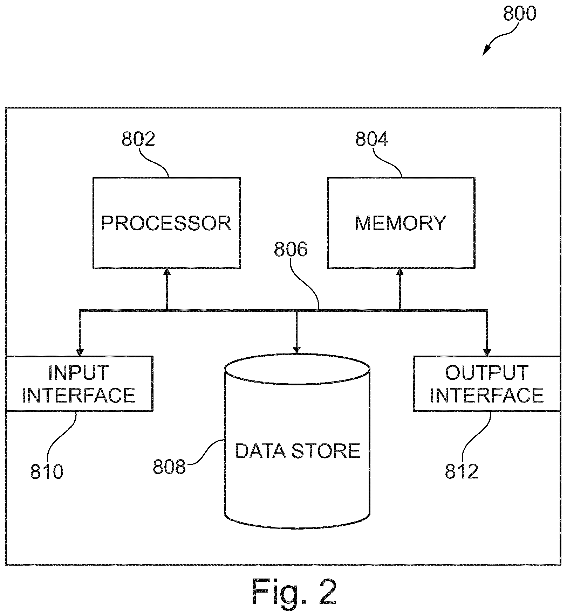

FIG. 2 illustrates an exemplary computing system 800 that can be used in accordance with the systems and methods disclosed herein. The computing system 800 may form part of or comprise any desktop, laptop, server, or cloud-based computing system. The computing system 800 includes at least one processor 802 that executes instructions that are stored in a memory 804. The instructions may be, for instance, instructions for implementing functionality described as being carried out by one or more components described herein or instructions for implementing one or more of the methods described herein. The processor 802 may access the memory 804 by way of a system bus 806. In addition to storing executable instructions, the memory 804 may also store conversational inputs, scores assigned to the conversational inputs, etc.

The computing system 800 additionally includes a data store 808 that is accessible by the processor 802 by way of the system bus 806. The data store 808 may include executable instructions, log data, etc. The computing system 800 also includes an input interface 810 that allows external devices to communicate with the computing system 800. For instance, the input interface 810 may be used to receive instructions from an external computer device, from a user, etc. The computing system 800 also includes an output interface 812 that interfaces the computing system 800 with one or more external devices. For example, the computing system 800 may display text, images, etc. by way of the output interface 812.

It is contemplated that the external devices that communicate with the computing system 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing system 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing system 800 may be a distributed system. Thus, for instance, several devices may be in communication by way of a network connection and may collectively perform tasks described as being performed by the computing system 800.

Various functions described herein can be implemented in hardware, software, or any combination thereof. If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disc storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-chip systems (SOCs), complex programmable logic devices (CPLDs), etc.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A resource failure mitigation method for a distributed control system, the method comprising:
predicting failure of a first resource executing a service;
persisting a state of the service; and
restoring the service at a second resource using the persisted state.

2. The method according to claim 1, wherein predicting failure of the first resource comprises predicting resource failure based on diagnostic data.

3. The method according to claim 2, wherein the diagnostic data comprise monitoring data relating to one or more performance metrics of the resource.

4. The method according to claim 2 or 3, wherein the diagnostic data comprise log data generated by one or more diagnostic tools.

5. The method according to any of claims 2-4, wherein the diagnostic data comprise event data relating to one or more events generated by the distributed control system.

6. The method according to any preceding claim, wherein predicting failure of the first resource comprises predicting resource failure in response to at least one performance metric passing a predetermined threshold.

7. The method according to any preceding claim, wherein predicting failure of the first resource comprises predicting resource failure in response to log data indicating violation of at least one predetermined rule.

8. The method according to any preceding claim, wherein predicting failure of the first resource comprises predicting resource failure in response to recognition of at least one predetermined event.

9. The method according to any preceding claim, wherein persisting the state of the service comprises checkpointing the service to capture a snapshot of the state of the service.

10. The method according to claim 9, wherein restoring the service at the second resource using the persisted state comprises using an image of the checkpointed state of the service to restore the service.

11. The method according to any preceding claim, wherein persisting the state of the service comprises checkpointing the state of a container in which the service is running, wherein the service is provided by a containerized application.

12. The method according to any preceding claim, wherein restoring the service at the second resource comprises first selecting the second resource from a plurality of available resources according to one or more predetermined criteria.

13. The method according to any preceding claim, further comprising using the distributed control system to control an industrial plant to carry out an industrial process following restoration of the service at the second resource.

14. A resource failure mitigation system configured to perform the method according to any preceding claim.

15. A computer-readable medium comprising instructions which, when executed by a computing system, cause the computing system to perform the method according to any of claims 1-13.
